# EUROPÄISCHE PATENTSCHRIFT

(11) **EP 1 061 829 B1**
(45) Veröffentlichungstag und Bekanntmachung des Hinweises auf die Patenterteilung: **16.03.2005**
(21) Anmeldenummer: 00901079.4
(22) Anmeldetag: 10.01.2000
(51) Int. Cl.: A46B 9/04, A61C 17/24

(54) **ZAHNBÜRSTE UND BÜRSTENTEIL**
TOOTHBRUSH AND PART OF A BRUSH
BROSSE A DENT ET PARTIE DE BROSSE

(30) Priorität: 12.01.1999 DE 19900765
(43) Veröffentlichungstag der Anmeldung: 27.12.2000
(73) Patentinhaber: Braun GmbH, 61476 Kronberg (DE)
(72) Erfinder: PAFFRATH, Dieter, D-82229 Seefeld (DE)
(74) Vertreter: Vorbeck, Wolfgang Ernst August, Dr.
(86) Internationale Anmeldenummer: PCT/EP2000/000108
(87) Internationale Veröffentlichungsnummer: WO 2000/041592

(56) Entgegenhaltungen:
- EP-A- 0 765 642
- CH-A- 676 663
- DE-A- 4 402 366
- FR-A- 2 776 170
- US-A- 5 177 826

## Beschreibung

Die Erfindung betrifft eine Zahnbürste mit einer Bürstenanordnung gemäß dem Oberbegriff von Anspruch 1 sowie einen Bürstenteil gemäß dem Oberbegriff von Anspruch 16.

Gattungsgemäße Bürstenanordnungen, auch als Borsten- bzw. Bürstenbüschelkonfigurationen bezeichnet, sind zur Verwendung bei Zahnbürsten vorgesehen, die einen vorzugsweise elektrischen Antrieb zur Bewegung der Bürstenanordnung bzgl. einer Bewegungsachse der Bürstenanordnung aufweisen. Hierbei kann es sich um eine vorzugsweise oszillierende Rotationsbewegung um die Bewegungsachse und/oder um eine vorzugsweise oszillierende Hubbewegung bzw. Vibrationsbewegung in Richtung der Bewegungsachse handeln. Die Bürstenanordnung hat einen Borstenträger und eine Vielzahl von an dem Borstenträger verankerten, von diesem abstehenden Borsten bzw. Borstenbüschel. Die freien Borstenenden definieren eine Arbeitsfläche, die auch als Putzfläche bezeichnet wird, weil meist ein wesentlicher Teil der Reinigungswirkung durch die freien Borstenenden bewirkt wird. Bevorzugte Anwendungsbereiche der Erfindung liegen bei der Beseitigung von Zahnbelägen bzw. Plaques, insbesondere bei der Reinigung von Zahnzwischenräumen. Für diesen Zweck optimierte Einrichtungen werden häufig auch als Interdentalbürsten bezeichnet.

Über lange Zeiten waren, abgesehen vom Besuch beim Zahnarzt, nur unzulängliche Mittel zur Reinigung und Pflege der Zahnzwischenräume verfügbar. Verbesserungen wurden durch Zahnbürsten mit beweglich antreibbaren Bürstenanordnungen angestrebt. Als ein Beispiel zeigt die DE 24 33 925 eine Zahnbürste mit zwei achsparallel nebeneinander angeordneten, hydrodynamisch drehbaren Borstenträgem. Die leicht divergierenden Borsten des einen Borstenträgers bilden eine der konvexen Außenform eines Backenzahns angepaßte Arbeitsfläche in Form einer konkaven Mulde, während die leicht divergierenden Borsten des anderen Borstenträgers eine kegelförmige Arbeitsfläche bilden, die zum Eindringen in Zahnzwischenräumen vorgesehen ist. Ein ähnlicher Vorschlag ist im US-Patent 5,862,559 offenbart. Die dort gezeigte Zahnbürste hat eine drehbare Bürstenanordnung mit parallel zur Bewegungsachse ausgerichteten Borstenbündeln, deren Borsten durch geeignete Längenbemessung eine insgesamt etwa kegelförmige Arbeitsfläche bilden, die die Reinigung von Zahnzwischenräumen erleichtern soll. Eine andere, besonders für die Reinigung von Interdentalräumen ausgelegte Bürstenanordnung ist in der EP 0 765 642 offenbart. Die mittels eines elektrischen Antriebes um eine Bewegungsachse drehbare Bürstenanordnung hat mehrere konzentrische Kreise mit Borstenbüscheln. Die Büschel des äußersten Borstenkreises sind derart in bzw. entgegen der Drehrichtung geneigt, daß sie die Drehachse der Bürstenanordnung unter einem Winkel kreuzen. Durch diese Schrägstellung in Bewegungsrichtung soll erreicht werden, daß im eingeschalteten Betriebszustand der elektrischen Zahnbürste die Borsten besser in die Interdentalräume eindringen können und somit die Zahnreinigung verbessert wird.

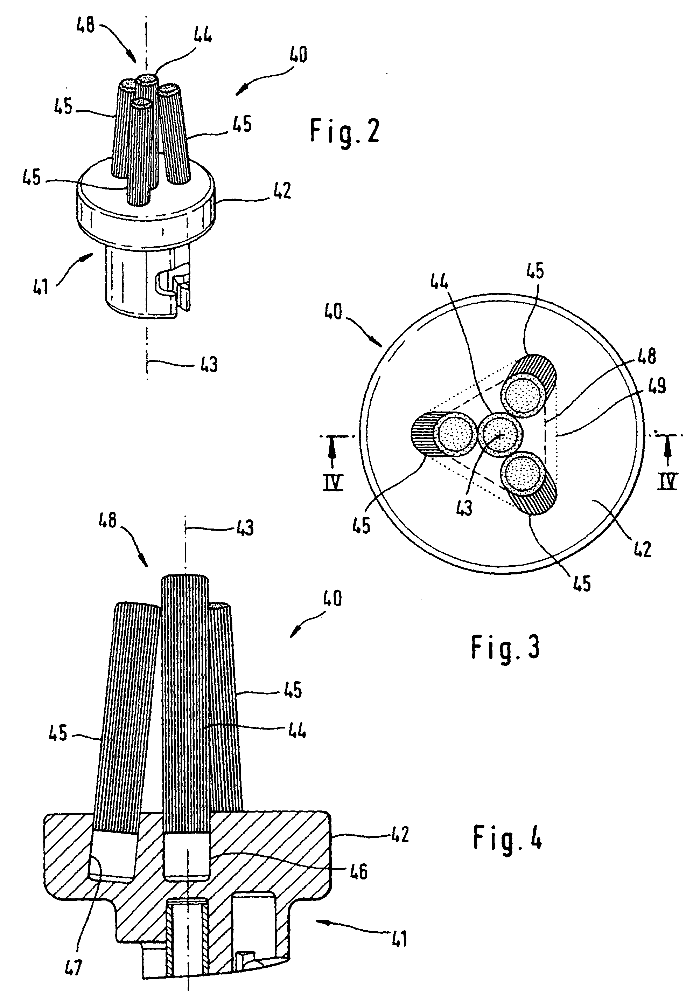

Aus dem Stand der Technik ist auch die CH-A-676 663 bekannt, die den Oberbegriff des Anspruchs 1 und den des Anspruchs 16 bildet. Die CH-A-676 663 offenbart eine spezielle Bürste um ein Implantat (17;18) gleichzeitig auf allen Seiten zu reinigen. Die Anordnung der Borsten ist so geschaffen, dass die Borsten sich über das Implantat (17;18) stülpen und das Implantat auf allen Seiten umgeben (Spalte 1, Zeiten 25-29; Figur 2). Die nach innen gerichteten Borstenenden bilden eine konkave Arbeitsfläche, die größer als ein Zahn selbst ist. Die Borstenbüschel sind "im Burstenkopf (3) versenkt" damit "eine Vertetzungsgefahr am Zahnfleisch oder an der Innenseite der Backe ausgeschlossen" ist (Spalte 1, Zeilen 33-36).

Der Erfindung liegt die Aufgabe zugrunde, eine Zahnbürste mit einer Bürstenanordnung der genannten Art zu schaffen, die einfach herstellbar ist und bei Verwendung bei einer Zahnbürste mit einem Antrieb für die Bürstenanordnung eine weiter verbesserte Zahnreinigung, insbesondere im Bereich von Zahnzwischenräumen, ermöglicht.

Zur Lösung dieser Aufgabe schlägt die Erfindung eine Zahnbürste mit Bürstenanordnung mit den Merkmalen von Anspruch 1 sowie einen Bürstenteil für eine Zahnbürste mit den Merkmalen von Anspruch 16 vor.

Erfindungsgemäß ist vorgesehen, daß die Zahnbürste eine Bürstenanordnung, einen auf einer Trägerstruktur beweglich zu einer Bewegungsachse montierten Borstenträger, und eine Bürstenanordnung aufweist, wobei die Bürstenanordnung mit Abstand zur Bewegungsachse, insbesondere exzentrisch oder konzentrisch, angeordnete Borsten aufweist, die in einem Neigungswinkel in Richtung zur Bewegungsachse geneigt sind, und daß die Borstenbuschel außerhalb der Trägerstruktur angeordnet sind. Die Borsten sind zweckmäßig in Borstenbündeln oder Borstenbüscheln gruppiert, die entsprechend so ausgerichtet sind, daß die Schwerpunktachsen bzw. Symmetrieachsen der Borstenbündel zur Bewegungsachse hin geneigt sind. Die erfindungsgemäße Neigung nach innen bewirkt, daß die freien Borstenenden der geneigten Borsten näher an der Bewegungsachse liegen als die Verankerungsstellen der Borsten im Bereich des Borstenträgers. Dadurch kann im Bereich der vorzugsweise abgerundeten freien Enden, also im Bereich der Putzfläche oder Arbeitsfläche, eine für eine gute Reinigungswirkung vorteilhafte große Borstendichte geschaffen werden, während im Bereich der Verankerung am Borstenträger einzelne Borstenbündel einen ausreichend großen Lateralabstand voneiander haben können. Damit ist es möglich, daß jede Verankerungsstelle eines Borstenbündels von ausreichend Borstenträgermaterial umgeben ist, um einen sicheren Halt am Borstenträger zu gewährleisten. Bei Herstellung mittels des Ankerdrahtbestopfungsverfahrens können die für die Aufnahme von Borstenbündeln erforderlichen Borstenlöcher mit ausreichend Lateralabstand zueinander gesetzt werden, so daß eine Bestopfung mit herkömmlichen Vorrichtungen ohne weiteres möglich ist. Bei einer bevorzugten Weiterbildung ist es beispielsweise dank der nach innen gerichteten Schrägstellung von Borsten so, daß die Arbeitsfläche bzw. Putzfläche um mindestens 20 % kleiner ist als die zur Beborstung vorgesehenen Verankerungsfläche des Borstenträgers, wobei die Größe der Putzfläche vorzugsweise zwischen ca. 50% und ca. 80% der Größe der Verankerungsfläche beträgt. Als Verankerungsfläche wird hier diejenige Fläche bezeichnet, die durch eine die Borsten bzw. Borstenbündel in ihren borstenträgernahen Fußbereich umschließende Umhüllende begrenzt wird.

Der Neigungswinkel bzw. die Schrägstellung kann so eingestellt werden, daß sich die einzelnen Borstenbündel im Bereich der Arbeitsfläche oder Putzfläche gegenseitig abstützen können. Dies kann zu einer signifikanten Reduzierung des Bürstenverschleißes führen, da einer Knickbildung entgegengewirkt wird.

Durch die nach innen gerichtete Schrägstellung oder Neigung außenliegender Borsten oder Borstenbündel ist außerdem eine generell konische oder kegelstumpfförmige Anordnung von Borsten erzeugbar, die ein Einführen der Borsten in Zahnzwischenräume erleichtert. Im Vergleich zu herkömmlichen Bürstenanordnungen mit im wesentlichen parallel zueinander verlaufenden Borsten wird durch die Schrägstellung außerdem bewirkt, daß die schräggestellten Borsten bei axialer Belastung, d.h. bei Belastung parallel zur Bewegungsachse, flexibler reagieren und scheinbar eine geringere axiale Bürstensteifigkeit aufweisen. Dadurch können Verletzungen des Zahnfleisches beim Einführen der Bürstenanordnung in Zahnzwischenraumbereiche vermindert oder vermieden werden.

Bei einer durch die Art der Zahnbürste vorgegebenen Bewegung bzgl. der Bewegungsachse, also insbesondere bei rotierend oszillierender Bewegung um diese Achse, passen sich die einzelnen Borsten bzw. Borstenbündel der Bürstenanordnung dank der Schrägstellung besonders gut an die Kontur der den bearbeiteten Zahnzwischenraum begrenzenden Zähne und/oder an die Kontur des zugehörigen Zahnfleischbereiches an und ermöglichen daher eine bessere Entfernung des supra-gingivalen Zahnbelags (Plaque) bzw. der Interdental-Plaque. Durch die erfindungsgemäße Anordnung von Borsten bzw. Borstenbündeln können sowohl punktförmige (interproximal), als auch linienförmige (Gingiva)-Zahnbereiche besser gereinigt werden.

Die Reinigungswirkung kann ggf. durch eine pulsierende bzw. vibrierende Hin- und Herbewegung im wesentlichen parallel zur Bewegungsachse unterstützt werden. Diese Stocherbewegung kann auch ohne gleichzeitige Drehbewegung vorteilhaft sein. Eine für den Einsatz erfindungsgemäßer Bürstenanordnungen besonders geeignete elektrische Zahnbürste, die sowohl eine oszillierende Drehbewegung um die Bewegungsachse, als auch eine oszillierende Hubbewegung parallel zur Bewegungsachse ermöglicht, ist in der DE 196 27 752 offenbart.

Bei einer bevorzugten Weiterbildung liegt der Neigungswinkel im Bereich unterhalb von ca. 15°, insbesondere im Bereich zwischen ca. 4° und ca. 8°. Diese relativ geringe Neigungswinkel reichen zum Erzielen der Vorteile der Erfindung aus und ermöglichen, insbesondere bei Neigungswinkeln bis ca. 8°, die Herstellung der Bürstenanordnung mit herkömmlichen Vorrichtungen zur Bestopfung mit Ankerdraht. Die Bürsten können wie bei Borstenbündeln mit 0° Schräge bestopft werden. Aufgrund der auf relativ geringe Neigungswinkel limitierten Schrägstellung können darüber hinaus Verrundungsqualitäten für die freien Borstenenden von über 90% erreicht werden.

Bei einer Weiterbildung ist vorgesehen, daß die Bürstenanordnung mindestens einen, vorzugsweise genau einen Borstenkranz mit im wesentlichen kreisförmig um die Bewegungsachse angeordneten Borsten aufweist, die in der beschriebenen Art in Richtung zur Bewegungsachse geneigt sind. Der vorzugsweise konzentrisch zur Bewegungsachse angeordnete Borstenkranz wird zweckmäßig durch mehrere, insbesondere drei, Borstenbündel gebildet, die mit gleichmäßigem Umfangsabstand zueinander am Borstenträger angeordnet sind. Ein derartiger außen liegender Borstenkranz bildet die beschriebenen kegelstumpfförmige Außenkontur der Borstenanordnung. Die Borstenbündel können symmetrisch angeordnet sein, so daß die Symmetrieachse der Borsten bzw. Bündel mit der Bewegungsachse der Bürstenanordnung zusammenfällt. Dadurch ist bei Drehung um die Bewegungsachse und/oder Vibration entlang der Bewegungsachse eine gleichmäßige Reinigungswirkung erzielbar.

Eine Weiterbildung zeichnet sich dadurch aus, daß die Bürstenanordnung ein im wesentlichen konzentrisch zur Bewegungsachse angeordnetes Zentralborstenbündel aufweist, das vorzugsweise zusätzlich zu einem das Zentralborstenbündel umgebenden Borstenkranz vorgesehen ist. Dadurch wird es möglich, verschiedene vorteilhafte Gestaltungen zu realisieren, bei denen sich die Eigenschaften der Bürstenanordnung im Zentralbereich, d.h. im Bereich der Bewegungsachse, von den Eigenschaften im umgebenden Außenbereich unterscheiden.

Insbesondere kann es so sein, daß die freien Borstenenden von Borsten im Bereich der Bewegungsachse die freien Borstenenden von weiter außen liegenden Borsten überragen, beispielsweise um zwischen ca. 0,5 mm bis ca. 1,5 mm. Die zentralen Borsten sind dadurch bevorzugt zur gezielten Reinigung von Zahnzwischenräumen prädestiniert, die durch eine stochernde Hubbewegung entlang der Bewegungsachse und/oder eine ggf. oszillierende Rotationsbewegung unterstützt wird. Die weiter zurückgesetzten, radial außen liegenden Randborsten können an den Zahnzwischenraum angrenzende Zahnoberflächen und Zahnfleischoberflächen bearbeiten.

Es ist also eine im wesentlichen konvexe, insbesondere kegelförmige oder pyramidenförmige Arbeitsfläche realisierbar, die ggf. gestuft sein kann. Zur Erhöhung der wirksamen Borstenlänge ohne Reduzierung der Bürstensteifigkeit in Axialrichtung kann es auch vorgesehen sein, daß der Bürstenträger im Bereich der Bewegungsachse eine Erhebung aufweist, die derart bemessen ist, daß die Borsten im Bereich der Bewegungsachse oberhalb des Niveaus von außen liegenden Borsten verankerbar sind. Beispielsweise kann ein 1 mm bis 2 mm hohes Mittenplateau auf einem ansonsten ebenen, beispielsweise scheibenförmigen Borstenträgerabschnitt vorgesehen sein. Dadurch kann erreicht werden, daß alle Borsten der Borstenanordnung im wesentlichen die gleiche freie Länge haben, jedoch trotzdem die Borsten im Mittelbereich über diejenigen des Randbereiches hinausragen. Zweckmäßige Borstenlängen, gemessen oberhalb des Borstenträgers, liegen im Bereich von ca. 6,5 mm bis ca. 8,5 mm, insbesondere bei ca. 7,5 mm.

Alternativ oder zusätzlich zu den die Borstentänge und/oder die Form der Arbeitsoberfläche betreffenden Merkmalen kann auch vorgesehen sein, daß die zentrischen Borsten, also die Borsten im Bereich der Bewegungsachse, eine höhere Härte aufweisen als die außen liegenden, exzentrischen Borsten. Als Härte ist hier in erster Linie die vom Benutzer wahrnehmbare Härte gemeint, die unter anderem durch die axiale Bürstensteifigkeit des Borstenmaterials und/oder durch die Schrägstellung oder Neigung von Borsten beeinflußbar ist. Bei einer bevorzugten Ausführung ist vorgesehen, daß die Härte der Borsten im Bereich der Bewegungsachse durch eine Borstenstärke von ca. 7 ± 2 mit bestimmt wird und/oder daß die Härte von exzentrischen Borsten durch eine Borstenstärke von ca. 6 ± 2 mil bestimmt wird. Die den Borstendurchmesser angegebene Dimension mil entspricht einem Tausendstel Inch bzw. 0,0254 mm. Im Allgemeinen haben sich Borstendurchmesser im Bereich von ca. 4,5 bis ca. 8 mit bewährt. insbesondere aus Gründen der Hygiene und der Haltbarkeit sind Borsten aus Kunststoff bevorzugt, insbesondere aus Nylon vom Typ PA 6.12. Es ist jedoch auch möglich, einen Teil der Borsten oder alle Borsten aus Naturfasern herzustellen.

Die im Zusammenhang mit den Zeichnungen beschriebenen bevorzugten Ausführungsformen von Bürstenanordnungen sind im wesentlichen symmetrisch zur Bewegungsachse aufgebaut, wobei bei der Ausführungsform mit zentrischen Borstenbündeln auch dessen Schwerpunktachse oder Symmetrieachse mit der Bewegungsachse zusammenfällt. Zur Verstärkung der Reinigungwirkung in Kombination mit einer oszillierenden Bewegung der Bürstenanordnung (rotierend und/oder vibrierend) kann auch vorgesehen sein, der Symmetrieachse des zentrischen Borstenbündels und/oder der gesamten Bürstenanordnung eine leichte Neigung zu geben, beispielsweise mit einem Neigungswinkel in der Größenordnung von 2 bis 6°, insbesondere ca. 4° bezogen auf die Bewegungsachse. Alternativ oder zusätzlich kann es auch so sein, daß die Symmetrieachse der gesamten Bürstenanordnung und/oder nur des zentrischen Borstenbündels relativ zu der Bewegungsachse seitlich versetzt ist, beispielsweise um ca. 0,5 bis ca. 1 mm. Dadurch ergibt sich beispielsweise bei Drehung um die Bewegungsachse eine der Drehung überlagerte, oszillierende Querbewegung quer zur Bewegungsachse, wodurch die Reinigungswirkung unterstützt werden kann.

Die Erfindung betrifft auch einen Bürstenteil zum Anbringen an eine Zahnbürste, die insbesondere zur Reinigung von Zahnzwischenräumen und zur Beseitigung von Zahnbelag sehr vorteilhaft ist. Sie hat eine beweglich antreibbare Bürstenanordnung, die einen Borstenträger und eine Vielzahl von an dem Borstenträger verankerten, von diesem abstehenden Borsten aufweist, und einen vorzugsweise elektrischen Antrieb zur Bewegung der Borstenanordnung bezüglich einer Bewegungsachse. Durch Verwendung erfindungsgemäßer Bürstenanordnungen ist eine derartige Zahnbürste auf einfache Weise zu einer für die Reinigung von Zahnzwischenräumen und/oder die Entfernung von Zahnbelägen besonders wirksame Zahnpflegeeinrichtung aufrüstbar. Zweckmäßig ist die Bürstenanordnung einem gesonderten, auswechselbaren Bürstenteil zugeordnet, das an einem Griffteil der Zahnbürste z.B. durch Anstecken befestigbar ist. Eine bevorzugte Ausführungsform einer Zahnbürste, die eine um die Bewegungsachse rotierend oszillierende und eine entlang der Bewegungsachse oszillierende Hubbewegung der Bürstenanordunung ermöglicht, ist in der DE 196 27 752 offenbart, deren die Zahnbürste und das Bürstenteil betreffenden Merkmale durch Bezugnahme zum Inhalt dieser Anmeldung gemacht werden.

Die beschriebenen Merkmale und weitere Merkmale der Erfindung ergeben sich auch aus der nachfolgenden Beschreibung einer bevorzugten Ausführungsform in Verbindung mit den Ansprüchen und den Zeichnungen. Hierbei können die einzelnen Merkmale jeweils für sich oder zu mehreren in Kombination miteinander verwirklicht sein. Es zeigen:
- Fig. 1: eine schematische Darstellung einer Ausführungsform einer elektrischen Zahnbürste mit einer ersten Ausführungsform einer erfindungsgemäßen Bürstenanordnung,
- Fig. 2: eine schrägperspektivische Ansicht einer bevorzugten Ausführungsform einer Bürstenanordnung mit einem zentrischen Borstenbündel und drei außen liegenden, zum zentrischen Borstenbündel geneigten Borstenbündel,
- Fig. 3: eine Draufsicht auf die Bürstenanordnung von Fig. 2,
- Fig. 4: einen Schnitt durch die Bürstenanordnung der Figuren 2 und 3 entlang der Linie IV-IV in Fig. 3,
- Fig. 5: eine schematische Darstellung der Verwendung einer anderen Ausführungsform einer erfindungsgemäßen Borstenanordnung zur Reinigung eines Zahnzwischenraumes, wobei die Bürstenanordnung ein zentrisches Borstenbündel mit längeren und außen liegende Borstenbündel mit kürzeren Borsten aufweist und wobei die Borsten von außen nach innen in der Länge zunehmen,
- Fig. 6: eine schrägperspektivische Darstellung einer anderen Ausführungsform einer erfindungsgemäßen Bürstenanordnung mit drei zur Zentralachse der Bürstenanordnung geneigten Borstenbündeln ohne zentrisches Borstenbündel und
- Fig. 7: eine Draufsicht auf die Bürstenanordnung von Fig. 6.

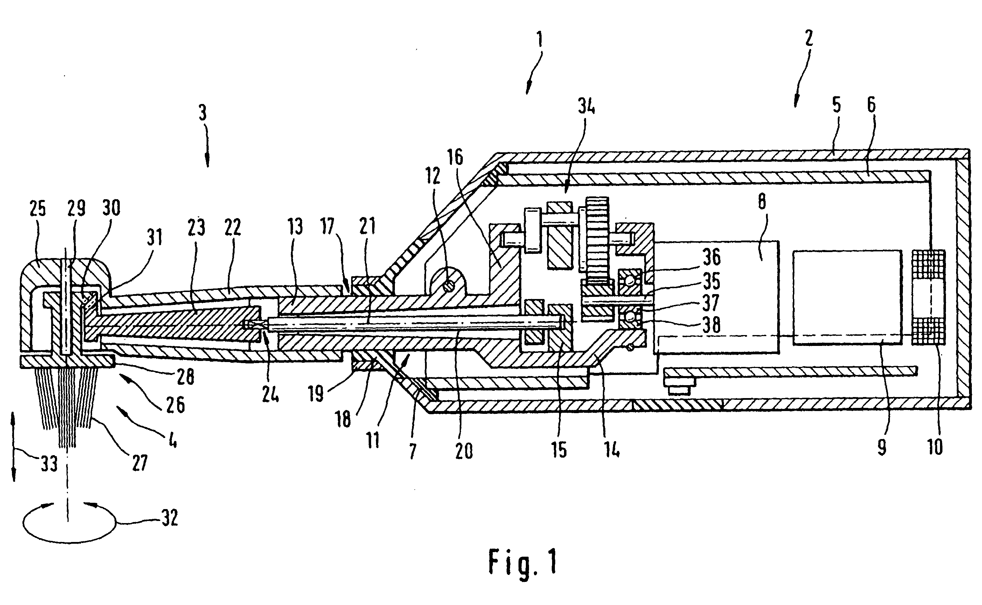

In Fig. 1 ist eine bevorzugte Ausführungsform einer elektrischen Zahnbürste 1 gezeigt, die zur Reinigung der Zähne eines Benutzers, insbesondere zur Entfernung von Plaque von den Zahnflächen und zur Reinigung von Zahnzwischenräumen vorgesehen ist. Die Zahnbürste hat ein Griffteil 2 mit einer etwa zylindrischen, länglichen Form, deren Durchmesser derart bemessen ist, daß ein Benutzer die Zahnbürste sicher an dem Griffteil 2 in die Hand nehmen kann. Auf das Vorderende des Griffteils 2 kann ein Bürstenteil 3 aufgesteckt werden, das ebenfalls eine im wesentlichen zylindrische, längliche Form aufweist, wobei der Durchmesser des Bürstenteils 3 kleiner als derjenige des Griffteiles ist, um ein Einführen des Bürstenteils 3 in den Mundraum zu ermöglichen. Am freien Ende des Bürstenteils ist eine beweglich antreibbare Bürstenanordnung 4 mit einer Vielzahl von Borsten zur Reinigung der Zähne, des Zahnfleisches und von Zahnzwischenräumen angebracht.

Das Griffteil 2 hat ein Gehäuse 5, in dem ein Chassis 6 untergebracht ist. Das Chassis 6 besitzt eine längliche, teilweise zylindrische Form und erstreckt sich nahezu über die gesamte Länge des Gehäuses 5. Das Chassis ist an seinem dem Bürstenteil 3 zugewandten Ende durch Polster 7 aus Kunststoff oder Gummi o. dgl. elastisch in dem Gehäuse 5 gehalten.

An dem Chassis 6 sind ein Elektromotor 8, ein Akkumulator 9 sowie weitere elektronische Bauteile, wie beispielsweise eine Ladespule 10 und dgl. befestigt. Die genannten Bauteile sind vorzugsweise hinterteinander in Längsrichtung des Griffteils 2 angeordnet.

In dem dem Bürstenteil 3 zugewandten Bereich des Griffteils 2 ist eine an dem Chassis 6 gelagerte Schwinge 11 vorgesehen, die um eine Achse 12 schwenkbar ist. Die Schwinge 11 ragt teilweise nach vome aus dem Griffteil 2 heraus. Die Schwinge umfaßt ein Rohr 13, einen Ausleger 14 sowie zwei Tragarme 15, 16. Das Rohr 13 der Schwinge 11 ist durch eine Öffnung 17 an dem dem Bürstenteil 3 zugewandten Ende des Griffteils 2 hindurchgesteckt und ragt aus dem Griffteil 2 heraus. Zwischen dem Rohr 13 und dem Gehäuse 5 des Griffteils 2 ist eine ringförmige Membran 18 aus Kunststoff oder Gummi o. dgl. vorgesehen, mit der das Rohr 13 der Schwinge 11 elastisch aus dem Griffteil 2 herausgeführt ist. Zur Halterung und Befestigung bzw. zur Abdichtung des Rohres 13 in dem Gehäuse 5 des Griffteils 2 ist eine Zwinge 19 vorgesehen, die die Membran 18 ringförmig umgibt.

Zumindest der aus dem Griffteil 2 herausragende Teil des Rohres 13 besitzt eine Querschnittsform, dessen Außendurchmesser eine Kontur aufweist. Auf diesen herausragenden Teil des Rohres 13 kann das Bürstenteil 3 aufgesteckt werden. Das Bürstenteil 3 besitzt zumindest an seinem dem Griffteil 2 zugewandten Ende eine Querschnittsform mit einem Innendurchmesser, der eine Kontur aufweist, die der Kontur des Außendurchmessers des Rohres 13 entspricht. Die einander zugeordneten Konturen sind dabei derart ausgebildet, daß das Bürstenteil 3 nur in einer einzigen Winkelstellung auf das Griffteil 2 aufsteckbar ist. Beispielsweise kann die Kontur sternförmig oder dreieckförmig o. dgl. ausgebildet sein.

Ist das Bürstenteil 3 auf das Rohr 13 der Schwinge 11 aufgesteckt, so bildet das Bürstenteil 3 ein weiteres Bestandteil der Schwinge 11 und ist damit um die Achse 12 schwenkbar.

In dem Rohr 13 der Schwinge 11 ist eine Welle 20 untergebracht, die einerseits an dem aus dem Griffteil 2 herausragenden freien Ende des Rohres 13 und andererseits in dem Tragarm 15 drehbar gelagert ist. Die Welle 20 erstreckt sich etwa in Längsrichtung des Griffteils 2 und des Bürstenteils 3 und legt eine Achse 21 fest. Die Welle 20, die ein weiteres Bestandteil der Schwinge 11 darstellt, ragt aus dem Rohr 13 heraus und hat dort an ihrem freien Ende eine Querschnittsform mit einem Außendurchmesser mit einer Kontur. Die Achse 12 der Schwinge 11 und die Achse 21 der Welle 20 sind etwa quer zueinander angeordnet.

Auf das Rohr 13 der Schwinge 11 kann das Bürstenteil 3 aufgesteckt werden. Das Bürstenteil 3 hat ein Trägerrohr 22, in dem eine Bürstenwelle 23 drehbar gelagert untergebracht ist. Die Bürstenwelle 23 ist bei aufgestecktem Bürstenteil 3 konzentrisch zur Achse 21 angeordnet und besitzt an ihrem dem Griffteil 2 zugewandten Ende eine Ausnehmung 24. Die Ausnehmung 24 hat einen Innendurchmesser mit einer Kontur, die der Kontur des Außendurchmessers der aus dem Rohr 13 herausragenden Welle 20 entspricht. Die einander zugeordneten Konturen sind derart ausgebildet, daß die Welle 20 in einer Winkelstellung in die Ausnehmung 24 unter Bildung einer drehfesten Verbindung eingesteckt werden kann.

Am freien Ende des Trägerrohrs 22 und damit am freien Ende des Bürstenteils 3 ist eine Schale 25 gehalten, in der die Bürstenanordnung 4 aufgenommen ist. Die Bürstenanordnung 4 hat einen Borstenträger 26, an dem eine Vielzahl von Borsten 27 befestigt sind, die vom Borstenträger abstehen. Der Borstenträger 26 hat einen scheibenförmigen Abschnitt 28, an dem die Borsten 27 verankert sind, und ist um eine Achse 29 drehbar gelagert. Die Achse 29 verläuft durch den Mittelpunkt des scheibenförmigen Abschnitts 28 und ist etwa quer zur Achse 21 der Welle 20 ebenfalls etwa quer zur Achse 12 der Schwinge 11 angeordnet. Über zwei ineinander greifende Kegelradsegmente 30, 31 kann eine alternierende bzw. oszillierende Drehbewegung der Bürstenwelle 23 um die Achse 21 eine alternierende bzw. oszillierende Drehbewegung des Borstenträgers 26 um die Achse 29 umgesetzt werden. Die Achse 29 ist also eine Bewegungsachse des Borstenträgers und dient unter anderem als Drehachse.

Der Borstenträger 26 beschreibt bei eingeschaltetem Antrieb 8 eine alternierende Drehbewegung (Pfeil 32) mit einem Drehwinkelbereich, der z.B. zwischen etwa ± 15° und etwa ± 40° liegen kann. Der Gesamtweg kann somit zwischen etwa 30° und etwa 80° liegen. Vorzugsweise beträgt der Drehwinkelbereich etwa ± 30° und der Gesamtweg somit ca. 60°. Es sind auch kleinere Drehwinkel und größere bis zu etwa ± 90° möglich. Die Frequenz der alternierenden Drehbewegung (Pfeil 32) des Borstenträgers kann vorteilhaft zwischen etwa 50 Hz und etwa 80 Hz, insbesondere bei ca. 63 Hz liegen.

Die alternierende Drehbewegung der Bürstenanordnung 4 um die Drehachse 27 wird durch den elektromotorischen Antrieb 8 erzeugt, der mittels einer geeigneten Getriebeeinrichtung 34 in drehender Antriebsverbindung mit der Welle 20 steht. Zur genaueren Beschreibung der Getriebeeinrichtung 34 sei auf die DE 196 27 752 verwiesen, deren diesbezüglicher Inhalt durch Bezugnahme zum Inhalt dieser Beschreibung gemacht wird. Die hier nicht näher beschriebene Kopplung zwischen Motor 8 und Schwinge 11 ist im übrigen so ausgelegt, daß gleichzeitig auch eine Vibrationsbewegung der gesamten Schwinge 11 um ihre Schwenkachse 12 erzeugt wird. Hierzu ist ein auf der Motorwelle 35 des Motors 8 befestigtes Kugellager 36 mit einem exzentrischen innenring 37 und einem zentrischen Außenring 38 vorgesehen, der an dem Tragarm 14 der Schwinge 11 befestigt ist. Da das aufgesteckte Bürstenteil 3 ein Bestandteil der Schwinge 11 darstellt, wird auch die Bürstenanordnung 4 in eine vibrierende Schwenkbewegung um die Achse 12 versetzt. Da die Achse 12 etwa quer zur Bewegungsachse 29 verläuft, führt die Bürstenanordnung also eine hin- und hergehende Hubbewegung (Pfeil 33) aus, deren Richtung etwa parallel zur Achse 29 verläuft. Die Bewegungsachse 29 stellt somit auch eine Hubachse der Bürstenanordnung dar.

Die Hubbewegung bewirkt, daß die Borsten 27 der Bürstenanordnung eine Stocherbewegung im wesentlichen parallel bzw. im spitzen Winkel zur Borstenrichtung ausführen. Der Weg der hin- und hergehenden Hubbewegung 33 kann vorteilhaft in einen Bereich von etwa ± 0,02 mm bis etwa ± 0,2 mm liegen, so daß der Gesamtweg zwischen etwa 0,04 und etwa 0,4 mm liegt. Vorzugsweise beträgt der Weg der Hubbewegung 33 etwa 0,14 mm, was einem Gesamtweg von etwa 0,28 mm entspricht. Die Frequenz der hin- und hergehenden Hubbewegung kann zwischen etwa 130 Hz und etwa 200 Hz liegen, insbesondere bei etwa 164 Hz. Damit ist die Frequenz der Hubbewegung 33 deutlich höher als diejenige der Drehbewegung 32.

Im folgenden werden bevorzugte Ausführungsformen von Bürstenanordnungen näher beschrieben. Die in den Figuren 2 bis 4 dargestellte Ausführungsform einer Bürstenanordnung 40 ist im wesentlichen gleich mit der Bürstenanordnung 4 von Fig. 1 ausgebildet. Der aus Kunststoff gefertigte Borstenträger 41 hat einen scheibenförmigen Abschnitt 42, an den sich einstückig ein im Durchmesser schmalerer Kopplungsabschnitt anschließt, der der Kopplung der Bürstenanordnung 40 an einen Bürstenteil und der Kraftübertragung zum drehenden Antrieb der Borstenanordnung um eine Bewegungsachse 43 dient. Im Borstenträger 41 sind vier Borstenbündel fest verankert, nämlich ein koaxial mit der Achse 43 angeordnetes Zentralborstenbündel 44 und drei in einen kreisförmigen Kranz um das Zentralborstenbündel herum angeordnete exzentrische Borstenbündel 45, die jeweils um gleiche Neigungswinkel von ca. 5 bis 6 ° zur Zentralachse 43 hin geneigt sind.

Die Borstenbündel 44, 45 sind mittels des herkömmlichen Ankerdrahtbestopfungsverfahrens in der Scheibe 42 verankert. Hierzu hat der Borstenträger 41 im Bereich des scheibenförmigen Abschnitts 42 vier entsprechend ausgerichtete, zentrische Sacklochbohrungen 46, 47 mit gleichen Durchessern im Bereich von 1,4 bis 1,8 mm, insbesondere etwa 1,6 mm, nämlich eine zentrische Sacklochbohrung 46 koaxial mit der Bewegungsachse 43 und drei radial außen liegende Bohrungen 47, die um jeweils 120° umfangsversetzt zueinander angeordnet sind und deren Bohrungsachsen um ca. 6° zur Zentralachse 43 nach innen geneigt sind. Der Lateralabstand zwischen den Bohrungen, die auch unterschiedliche Durchmesser haben können, beträgt etwa 50 bis 80% des Bohrungsdurchmessers, so daß der für eine Ankerdrahtbestopfung vorteilhafte Minimalabstand von ca. 0,7 mm problemlos eingehalten werden kann.

Jedes Borstenbündel 44, 45 enthält ausschließlich Kunststoffborsten, bevorzugt aus Nylon PA 6.12. Die weiß bzw. farblos erscheinenden Borsten des zentralen Borstenbündels 44 haben eine mittlere Borstenstärke bzw. einen mittleren Borstendurchmesser von ca. 0,18 mm, die mittlere Anzahl der Borsten pro Bündel beträgt bei der Ausführungsform mit ca. 1,6 mm Durchmesser der Sacklochbohrungen etwa 52 ± 4. Die Borsten der äußeren Borstenbündel 45 sind mit einem mittleren Borstendurchmesser von 0,15 mm dünner und aufgrund dieses Umstandes weniger steif als die Borsten des zentralen Borstenbündels. Die mittlere Borstenanzahl beträgt hier etwa 64 ± 4 Borsten pro Bündel. Die Borsten sind hier zur besseren Unterscheidung farbig, beispielsweise grün. Die Borstenlänge, gemessen über dem Scheibenabschnitt 42, beträgt ca. 7,5 ± 1 mm bei den außen liegenden Borstenbündeln, während die Borsten des zentralen Bündels 44 ca. 1,0 ± 0,5 mm länger sind. Hiermit ergibt sich im Bereich der abgerundeten freien Enden der Borsten eine Arbeitsfläche oder Putzfläche 48, die nach Art einer dreieckigen Stufenpyramide geformt und in der Mitte gegenüber den Randbereichen erhöht ist.

Aufgrund der Schrägstellung der äußeren Borstenbündel 45 hat die in Fig. 3 gestrichen umgrenzte Arbeitsfläche 48 mit ca. 3,15 mm einen deutlich kleineren mittleren Umhüllungsdurchmesser als die Verankerungsfläche 49. Die Verankerungsfläche wird durch eine die Borstenbündel in ihrem Fußbereich außen verbindende Umhüllende (in Fig. 3 als gepunktete Linie gezeigt) begrenzt. Die Schrägstellung der äußeren Borstenbündel ermöglicht also einerseits einen ausreichenden Abstand der Borstenaufnahmebohrungen 46, 47, um ein problemloses Bestopfen im Ankerdrahtbestopfungsverfahren zu ermöglichen, und andererseits läßt sich eine im Vergleich zur Verankerungsfläche relativ kleine Arbeitsfläche realisieren, die ein gezieltes Arbeiten, und insbesondere in Verbindung mit der Schrägstellung der äußeren Borstenbündel, ein problemloses Eindringen von Borsten in Zahnzwischenräume ermöglicht.

Die Schrägstellung der äußeren Borstenbündel bewirkt auch, daß die vom Benutzer empfundene axiale Bürstensteifigkeit, also praktisch eine Stauchfestigkeit in Richtung parallel zur Achse 43, im Vergleich zu den Borsten des zentralen Borstenbündels reduziert ist. Damit ist auch die Gefahr von Zahnfleischverletzungen beim Eindrücken der Borsten in Zahnzwischenräumen vermindert. Außerdem stützen sich die im Bereich der freien Borstenenden teilweise berührenden Borstenbündel gegenseitig ab, wobei insbesondere die drei schrägen Borstenbündel 45 das zentrale Innenbündel 44 abstützen. Dies trägt zu einer signifikanten Reduzierung des Bürstenverschleißes bei.

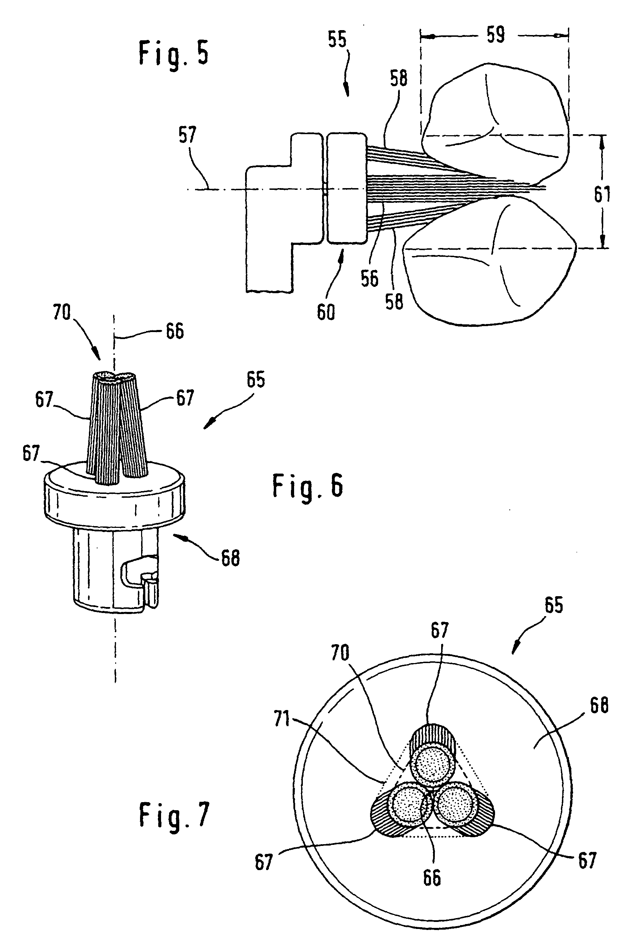

In Fig. 5 ist schematisch eine andere Ausführungsform einer Bürstenanordnung 55 gezeigt, die ebenfalls ein zentrales Borstenbündel 56 und drei in einem Kranz um dieses angeordnete, in einem Neigungswinkel von ca. 8° zur Bewegungsachse 57 geneigte exzentrische Borstenbündel 58 aufweist. Es ist zu erkennen, daß die maximale freie Länge der zentrischen Borsten höchstens etwa der maximalen Tiefe 59 des Zahnzwischenraumes in horizontaler Richtung entspricht und daß der Durchmesser des scheibenförmigen Abschnitts des Borstenträgers 60 etwa in der Größenordnung eines seitlichen Abstandes 61 der Vorderkanten zweier benachbarter Zähne liegt. Dadurch wird erreicht, daß sich die Borsten selbst zentrierend in dem Zahnzwischenraum einführen. In Abweichung von der in den Figuren 2 bis 4 gezeigten Ausführungsform ist zur besseren Führung der Borsten in dem Zahnzwischenraum eine Abschrägung der Borsten vorgesehen, die derart vorgenommen ist, daß die Borsten von außen nach innen in der Länge zunehmen, so daß eine insgesamt etwa kegelförmige Arbeitsfläche entsteht. Diejenigen Borsten, die bei engen Zahnzwischenräumen nicht durch diese hindurchpassen, können sich teilweise umbiegen und so der Reinigung der unmittelbaren Umgebung des Zahnzwischenraumes dienen. Hier handelt es sich vorwiegend um die peripheren Borsten, die, wie erwähnt, vorzugsweise weicher sind als die Borsten des zentralen Borstenbündels. Dadurch, daß der äußere Borstenkranz schräg nach innen gerichtete Bündel aufweist, ist bei rotierenden Borsten eine besonders effektive Einführung in den Zahnzwischenraum möglich.

Im Hinblick auf die Verwendung als Zahnzwischenraumbürste lassen sich bei den bisher beschriebenen Ausführungsformen insbesondere folgende Vorteile nennen. Durch die besondere Anordnung (Außenschräge), Formgebung und Größe der Borsten finden diese ihren Weg in die Zahnzwischenräume praktisch von selbst, ohne daß hierfür eine besondere Geschicklichkeit notwendig wäre, denn infolge der Rotation um die Bewegungsachse findet eine Selbstzentrierung der Borsten im Zahnzwischenraum statt. Dieser wird optimal gereinigt, da, je nach aufgewendetem manuellen Druck, weniger oder mehr Borsten in den Zahnzwischenraum gepreßt werden können, so daß eine weitgehend vollständige Beseitigung von Zahnbelägen gewährleistet ist. Die Borsten können, wie im Zusammenhang mit Fig. 5 erläutert, in ihrer Länge der Breite des Zahnzwischenraumes derart angepaßt sein, daß sie durch den gesamten Zahnzwischenraum hindurchtreten können. Daß unter Umständen ein Teil der Borsten während der Rotation nach außen umgebogen wird, insbesondere die exzentrischen im Außenbereich, ist kein Nachteil, weil dadurch auch die unmittelbare Umgebung des Zahnzwischenraumes mitgereinigt wird. Darüber hinaus ist auch eine Reinigung von bereits gebildeten Zahnfleischtaschen möglich, in denen sich bekanntlich Speisereste und Bakterien ansammeln können. Die insgesamt etwa kegelstumpfförmige bzw. konische Außenkontur bevorzugter Bürstenanordnungen ermöglichen es, daß die Borsten sich unterschiedlichen Gebissen gut anpassen. Größere Lücken werden dadurch gereinigt, daß die Borsten entsprechend tiefer in die Zahnlücken geführt werden, während zur Reinigung engerer Lücken gegebenenfalls ausschließlich die längeren, zentrischen Borsten verwendet werden können. Die aufgrund der Anordnung (Schrägstellung) und/oder aufgrund von Materialeigenschaften (z.B. Borstendurchmesser) gut realisierbare Ausgestaltung derart, daß außen liegende, periphere Borsten weicher sind als innen liegende, zentrale Borsten, vermeidet zuverlässig eine Verletzung von Zahnfleisch und kann zur Massage des Zahnfleisches genutzt werden.

Die Figuren 6 und 7 zeigen eine andere Ausüfhrungsform einer erfindungsgemäßen Bürstenanordnung 65, die sich von der Ausführungsform gemäß Fig. 2 bis 4 im wesentlichen dadurch unterscheidet, daß sie kein zentrisches Borstenbündel besitzt und daß der äußere Borstenkranz einen kleineren Durchmesser hat. Es sind lediglich drei nach Art eine Kranzes um die Symmetrieachse bzw. Bewegungsachse 66 der Bürstenanordnung angeordnete, periphere Borstenbündel 67 vorgesehen. Diese sind derart in einen Neigungswinkel von ca. 6° in Richtung zur Symmetrieachse 66 geneigt, daß die Borstenbündel im Bereich ihrer freien Borstenenden aneinander stoßen, während sie in Verankerungsbereich nahe dem Borstenträger 68 einen lateralen Abstand von ca. 0,7 mm voneinander haben. Die Borsten der Borstenbündel 67 sind hinsichtlich Länge, Borstenstärke und Borstenmaterial identisch mit den Borsten der peripheren Borstenbündel 45 der Ausführungsform gemäß Figuren 1 bis 4. Im Unterschied zu dieser liegen die Bohrungen zur Aufnahme der Borstenbündel näher beieinander und es ist keine zentrale Bohrung vorgesehen.

Die drei Borstenbündel 67 sind aufgrund ihrer Schrägstellung flexibel. Im Vergleich zu herkömmlichen, nicht angeschrägten Borstenbündeln gleichen Materials ist die axiale Bürstensteifigkeit jedoch reduziert und die Ausdehnung der im wesentlichen flachen Arbeitsfläche oder Putzfläche 70 im Bereich der freien Borstenenden ist durch das Aneinanderstoßen der Borstenbündel auf einem Wert von ca. 4,5 bis 6 mm² minimiert. Bei geraden, d.h. parallel zur Achse 66 verlaufenden Borsten würde dagegen die Flächenausdehnung der Arbeitsfläche 70 derjenigen der Verankerungsfläche 71 entsprechen, deren mittlerer Durchmesser ca. 3,8 mm beträgt. Aufgrund der Schrägstellung stützen sich die einzelnen Borstenbündel aneinander ab, wodurch insbesondere Bürstenverschleiß reduziert wird. Die schlanke, insgesamt etwa kegelstumpfförmige Form der gesamten Bürstenanordnung und die flexiblen einzelnen Borstenbündel ermöglichen in vorteilhafter Weise die für Interdentalbürsten erwünschte Zahnoberflächenreinigung und interproximale Penetration, d.h. das Eindringen in die Zahnzwischenräume.

Die gezeigten Ausführungsformen sind im Ankerdrahtbestopfungsverfahren hergestellt, bei dem zunächst im Körper des Borstenträgers die entsprechenden Haltebohrungen für die Borstenbündel vorgesehen und anschließend die Bündel in diese Bohrung gestopft und dort befestigt werden. Da bevorzugte Neigungswinkel mit beispielsweise 6 ° relativ gering sind, sind hierzu an herkömmlichen Vorrichtungen zur Bohrungsherstellung im Prinzip keine aufwendigen Änderungen erforderlich. Es ist auch möglich, erfindungsgemäße Bürstenanordnungen durch Umspritzen der Borstenbündel mit Spritzgußmaterial und durch Verbindung mit einem gespritzten Borstenträger herzustellen. Selbstverständlich können auch mehr als drei oder vier einzelne Borstenbündel eingesetzt werden, beispielsweise 5, 6, 7 oder 8. Eine nicht gezeigte Ausführungsform hat nur zwei Borstenbündel. In diesem Fall kann die Symmetrieachse der Bohrungsanordnung quer zur Achse des Mundstücks stehen. Vorzugsweise sind die Borstenenden aller Borsten bzw. Borstenbündel verrundet, was beispielsweise durch Beschleifen mittels herkömmlicher Trommeln oder Scheiben erfolgen kann, die mit Schleifpapier versehen oder mit Diamantpulver beschichtet sind. Herstellungstechnisch ist es hier vorteilhaft, wenn bei den in den Figuren 1 bis 5 gezeigten Bürstenanordnungen zunächst die kürzeren Borsten bestopft und verrundet und anschließend das längere Borstenbündel bestopft und verrundet wird. Bei der Ausführungsform gemäß Fig. 5 kann die konische Formgebung der Arbeitsfläche durch geeignetes Schleifen nach Bestopfen aller Bohrungen erfolgen.

In Versuchen hat sich gezeigt, daß die Ausführungsform gemäß Fig. 1 bis 4 und auch diejenige von Fig. 5 im Vergleich zur Ausführungsform nach Fig. 6 und 7 eine bessere interproximale Penetration ermöglicht, also ein besseres Eindringen in die Zahnzwischenräume. Möglicherweise kann durch die abstoßende Wirkung des zentralen Borstenbündels eine etwas geringere Reinigungswirkung im Zahnfleischbereich bedingt sein. Wenn hier eine besonders wirksame Reinigung gewünscht ist, kann mit Vorteil eine Ausführungsform ähnlich oder gleich derjenigen der Figuren 6 und 7 verwendet werden. in einer Gesamtbetrachtung, die sowohl die Reinigungsfähigkeit im Zahnzwischenraumbereich, als auch diejenige im Zahnfleisch bereich berücksichtigt, zeigen alle beschriebenen Ausführungsformen im wesentlichen vergleichbare Putzergebnisse, die deutlich über denjenigen herkömmlicher Borstenanordnungen für Interdentalbürsten liegen.

## Patentansprüche

1. Zahnbürste mit einer beweglich antreibbaren Bürstenanordnung, einem auf einer Trägerstruktur (25) beweglich bzgl. einer Bewegungsachse montierten Borstenträger (26, 41, 68) und eine Vielzahl von an dem Borstenträger verankerten, von dem Borstenträger abstehenden Borsten sowie mit einem vorzugsweise elektrischen Antrieb zur Bewegung der Bürstenanordnung bzgl. der Bewegungsachse aufweist, wobei die Bürstenanordnung mit Abstand zur Bewegungsachse (29; 43; 57; 66) angeordnete Borsten (45; 58; 67) aufweist, die in einem Neigungswinkel in Richtung zur Bewegungsachse geneigt sind, **dadurch gekennzeichnet, daß** die Borstenbüschel außerhalb der Trägerstruktur (25) angeordnet sind.

2. Zahnbürste nach Anspruch 1, **dadurch gekennzeichnet, daß** der Neigungswinkel im Bereich unterhalb von ca. 15° liegt, vorzugsweise im Bereich zwischen ca 4° und ca. 8°.

3. Zahnbürste nach einem der vorhergehenden Ansprüche, **dadurch gekennzeichnet, daß** die Borsten mit ihren freien Borstenenden eine Arbeitsfläche (48; 70) der Bürstenanordnung bilden, die kleiner ist als eine zur Beborstung des Borstenträgers vorgesehene Verankerungsfläche (49; 71), wobei die Arbeitsfläche vorzugsweise weniger als 80%, insbesondere zwischen ca. 50% und ca. 80% so groß ist wie die Verankerungsfläche.

4. Zahnbürste nach einem der vorhergehenden Ansprüche, **dadurch gekennzeichnet, daß** die Borsten mit ihren freien Borstenenden eine Arbeitsfläche (48; 70) mit einer Flächenausdehnung zwischen ca. 3 mm² und ca. 8 mm², insbesondere zwischen ca. 4 mm² und ca. 6 mm² bilden.

5. Zahnbürste nach einem der vorhergehenden Ansprüche, **dadurch gekennzeichnet, daß** die Borsten freie Borstenenden haben und daß die freien Borstenenden von im Bereich der Bewegungsachse (29; 43; 57) angeordneten Borsten (44) die freien Borstenenden von mit Abstand zur Bewegungsachse angeordneten Borsten (45; 58; 67) überragen, vorzugsweise um zwischen ca. 0,5 mm bis ca. 1,5 mm.

6. Zahnbürste nach einem der vorhergehenden Ansprüche, **dadurch gekennzeichnet, daß** der Borstenträger im Bereich der Bewegungsachse eine Erhebung aufweist, die derart bemessen ist, daß Borsten im Bereich der Bewegungsachse oberhalb eines Niveaus von mit Abstand zur Bewegungsachse angeordneten Borsten verankerbar sind, wobei die Erhebung vorzugsweise eine Höhe zwischen ca. 1 mm und ca. 2 mm aufweist.

7. Zahnbürste nach einem der vorhergehenden Ansprüche, **dadurch gekennzeichnet, daß** sie einen Borstenkranz mit im wesentlichen kreisförmig um die Bewegungsachse angeordneten Borsten aufweist, die in dem Neigungswinkel in Richtung zur Bewegungsachse (29; 43; 57; 66) geneigt sind; wobei der Borstenkranz vorzugsweise mehrere, insbesondere drei Borstenbündel (45; 58; 67) aufweist.

8. Zahnbürste nach einem der vorhergehenden Ansprüche, **dadurch gekennzeichnet, daß** sie ein im wesentlichen zentrisch zur Bewegungsachse (29; 43; 57) angeordnetes Zentralborstenbündel (44; 56) aufweist, wobei das Zentralborstenbündel vorzugsweise zusätzlich zu einem die Bewegungsachse umgebenden Borstenkranz vorgesehen ist.

9. Zahnbürste nach einem der vorhergehenden Ansprüche, **dadurch gekennzeichnet, daß** Borsten im Bereich der Bewegungsachse (29; 43) eine höhere Härte aufweisen als mit Abstand zur Bewegungsachse angeordnete Borsten.

10. Zahnbürste nach Anspruch 9, **dadurch gekennzeichnet, daß** die Härte von Borsten im Bereich der Bewegungsachse (29; 43; 57) durch eine Borstenstärke von 7 ± 2 mil bestimmt ist und/oder daß die Härte von mit Abstand zur Bewegungsachse angeordneten Borsten durch eine Borstenstärke von ca. 6 ± 2 mit bestimmt ist.

11. Zahnbürste nach einem der vorhergehenden Ansprüche, **dadurch gekennzeichnet, daß** die Borsten eine freie Borstentänge zwischen ca. 6,5 mm und ca. 8,5 mm aufweisen, insbesondere von ca. 7,5 mm.

12. Zahnbürste nach einem der vorhergehenden Ansprüche, **dadurch gekennzeichnet, daß** die Borsten eine im wesentlichen flache Arbeitsfläche (70) bilden.

13. Zahnbürste nach einem der Ansprüche 1 bis 11, **dadurch gekennzeichnet, daß** die Borsten eine im wesentlichen konvexe Arbeitsfläche (48) bilden, wobei die Arbeitsfläche vorzugsweise im wesentlichen kegelförmig oder pyramidenförmig und/oder gestuft ausgebildet ist.

14. Zahnbürste nach einem der vorhergehenden Ansprüche, **dadurch gekennzeichnet, daß** der Bürstenträger sacklochartige Aufnahmeöffnungen (46, 47) für Borstenbündel aufweist und daß die Borstenbündel mittels eines Ankerdrahtstopfverfahrens in dem Borstenträger verankert sind.

15. Zahnbürste nach einem der vorhergehenden Ansprüche 1 bis 13, **dadurch gekennzeichnet, daß** die Bürstenanordnung durch Umspritzen von Borstenbündeln unter Bildung des Borstenträgers im Spritzgußverfahren hergestellt ist.

16. Bürstenteil (3) zum Anbringen, insbesondere zum Anstecken, an einen Griffteil (2) einer Zahnbürste, wobei das Bürstenteil eine drehbar antreibbare Welle (23) aufweist, die mit einer Bürstenanordnung (4) in Antriebsverbindung zur Bewegung der Bürstenanordnung bzgl. einer Bewegungsachse (29) steht, die Borsten (45; 58; 67) auf einem auf einer Trägerstruktur (25) beweglich der Bewegungsachse (29) montierten Borstenträger mit Abstand zur Bewegungsachse (29; 43; 57; 66) angeordnet und in einem Neigungswinkel in Richtung zur Bewegungsachse geneigt sind, **dadurch gekennzeichnet, dass** die Borstenbüschel außerhalb der Trägerstruktur (25) angeordnet sind.

17. Bürstenteil nach Anspruch 16, **gekennzeichnet durch** die Merkmale des kennzeichnenden Teils von mindestens einem der Ansprüche 2 bis 15.

## Claims

1. A toothbrush with a movably drivable brush arrangement, with a bristle carrier (26, 41, 68) mounted on a carrier structure (25) for movement relative to a motion axis, and with a plurality of bristles anchored to the bristle carrier and upstanding from the bristle carrier, and with a preferably electric drive mechanism for moving the brush arrangement relative to the motion axis, said brush arrangement including bristles (45; 58; 67) that are disposed in a spaced relationship to the motion axis (29; 43; 57; 66) and are inclined at an angle of inclination in the direction of the motion axis, **characterized in that** the bristle tufts are arranged outside the carrier structure (25).

2. The toothbrush as claimed in claim 1, **characterized in that** the angle of inclination is in the range of smaller than about 15°, preferably in the range of between about 4° and about 8°.

3. The toothbrush as claimed in any one of the preceding claims, **characterized in that** the bristles form with their free bristle ends a working face (48; 70) of the brush arrangement which is smaller than an anchor area (49; 71) provided for bristling the bristle carrier, said working face being of a size preferably less than 80%, in particular between about 50% and about 80% less than the anchor area.

4. The toothbrush as claimed in any one of the preceding claims, **characterized in that** the bristles form with their free bristle ends a working face (48; 70) having a surface area of between about 3 mm² and about 8 mm², in particular between about 4 mm² and about 6 mm².

5. The toothbrush as claimed in any one of the preceding claims, **characterized in that** the bristles have free bristle ends and that the free ends of bristles (44) arranged in the area of the motion axis (29; 43, 57) protrude beyond the free ends of bristles (45; 58; 67) spaced from the motion axis, preferably by an amount of between about 0.5 mm and about 1.5 mm.

6. The toothbrush as claimed in any one of the preceding claims, **characterized in that** the bristle carrier has an elevation in the area of the motion axis which is dimensioned such that bristles in the area of the motion axis are adapted to be anchored above a level of bristles spaced from the motion axis, said elevation being of a height preferably between about 1 mm and about 2 mm.

7. The toothbrush as claimed in any one of the preceding claims, **characterized in that** it includes a ring of bristles in which the bristles are arranged in an essentially circular array around the motion axis and are inclined in the direction of the motion axis (29; 43; 57; 66) at the angle of inclination, with the ring of bristles including preferably several, in particular three, bristle tufts (45; 58; 67).

8. The toothbrush as claimed in any one of the preceding claims, **characterized in that** it includes a center tuft of bristles (44; 56) arranged essentially concentrically with the motion axis (29; 43; 57), said center tuft being provided preferably in addition to a bristle ring surrounding the motion axis.

9. The toothbrush as claimed in any one of the preceding claims, **characterized in that** bristles in the area of the motion axis (29; 43) are of greater hardness than bristles disposed in a spaced relationship to the motion axis.

10. The toothbrush as claimed in claim 9, **characterized in that** the hardness of bristles in the area of the motion axis (29; 43; 57) is determined by a bristle strength of 7 ± 2 mil, and/or the hardness of bristles disposed in a spaced relationship to the motion axis is determined by a bristle strength of about 6 ± 2 mil.

11. The toothbrush as claimed in any one of the preceding claims, **characterized in that** the bristles have a free bristle length of between about 6.5 mm and about 8.5 mm, in particular of about 7.5 mm.

12. The toothbrush as claimed in any one of the preceding claims, **characterized in that** the bristles form an essentially flat working face (70).

13. The toothbrush as claimed in any one of the claims 1 to 11, **characterized in that** the bristles form an essentially convex working face (48) which is preferably of an essentially conical or pyramidal and/or stepped configuration.

14. The toothbrush as claimed in any one of the preceding claims, **characterized in that** the bristle carrier includes blind-end type hole mounts (46, 47) for receiving bristle tufts, and that the bristle tufts are anchored in the bristle carrier using an anchor wire tufting method.

15. The toothbrush as claimed in any one of the preceding claims 1 to 13, **characterized in that** the brush arrangement is manufactured by the process of injection-molding material around bristle tufts while the bristle carrier is being formed by injection molding.

16. A brush section (3) for attachment, in particular for plugging, to a handle section (2) of a toothbrush, said brush section having a shaft (23) that is adapted to be driven in rotation and is in driving connection with a brush arrangement (4) for causing movement of the brush arrangement relative to a motion axis (29), the bristles (45; 58; 67) being disposed in a spaced relationship to the motion axis (29; 43; 57; 66) on a bristle carrier mounted on a carrier structure (25) for movement relative to the motion axis (29) and being inclined at an angle of inclination in the direction of the motion axis, **characterized in that** the bristle tufts are arranged outside the carrier structure (25).

17. The brush section as claimed in claim 16, **characterized by** the features of the characterizing portion of at least one of the claims 2 to 15.

## Revendications

1. Brosse à dents munie d'un agencement de brosse pouvant être entraîné en mouvement, un support de poils (26, 41, 68) monté sur une structure porteuse (25) de manière mobile par rapport à un axe de mouvement et une pluralité de poils faisant saillie du support de poils, ancrés sur le support de poils ainsi que d'un entraînement de préférence électrique en vue du mouvement de l'agencement de brosse par rapport à l'axe de mouvement, l'agencement de brosse présentant des poils (45 ; 58 ; 67) disposés à distance de l'axe de mouvement (29 ; 43 ; 57 ; 66) qui sont inclinés selon un angle d'inclinaison dans la direction de l'axe de mouvement, **caractérisée en ce que** les touffes de poils sont disposées en dehors de la structure porteuse (25).

2. Brosse à dents selon la revendication 1, **caractérisée en ce que** l'angle d'inclinaison se trouve dans la plage en dessous d'environ 15°, de préférence dans la plage comprise entre environ 4° et environ 8°.

3. Brosse à dents selon l'une quelconque des revendications précédentes, **caractérisée en ce que** les poils forment avec leurs extrémités libres de poils une surface de travail (48 ; 70) de l'agencement de brosse qui est plus petite qu'une surface d'ancrage (49 ; 71) prévue en vue de la fourniture de poils du support de poils, la surface de travail étant aussi grande que la surface d'ancrage de préférence à moins de 80 %, notamment entre environ 50 % et environ 80 %.

4. Brosse à dents selon l'une quelconque des revendications précédentes, **caractérisée en ce que** les poils forment avec leurs extrémités libres de poils une surface de travail (48 ; 70) avec une superficie comprise entre environ 3 mm² et environ 8 mm², notamment entre environ 4 mm² et environ 6 mm².

5. Brosse à dents selon l'une quelconque des revendications précédentes, **caractérisée en ce que** les poils ont des extrémités libres de poils et **en ce que** les extrémités libres de poils (44) disposés dans la région de l'axe de mouvement (29 ; 43 ; 57) dépassent des extrémités libres de poils (45 ; 58 ; 67) disposés à distance de l'axe de mouvement, de préférence d'une distance comprise entre environ 0,5 mm et environ 1,5 mm.

6. Brosse à dents selon l'une quelconque des revendications précédentes, **caractérisée en ce que** le support de poils présente dans la région de l'axe de mouvement un rehaussement qui est mesuré de sorte que des poils puissent être ancrés dans la région de l'axe de mouvement au-dessus d'un niveau de poils disposés à distance de l'axe de mouvement, le rehaussement présentant de préférence une hauteur comprise entre environ 1 mm et environ 2 mm.

7. Brosse à dents selon l'une quelconque des revendications précédentes, **caractérisée en ce qu'**elle présente une couronne de poils avec des poils disposés essentiellement de manière circulaire autour de l'axe de mouvement qui sont inclinés selon l'angle d'inclinaison dans la direction de l'axe de mouvement (29 ; 43 ; 57 ; 66), la couronne de poils présentant de préférence plusieurs, notamment trois faisceaux de poils (45 ; 58 ; 67).

8. Brosse à dents selon l'une quelconque des revendications précédentes, **caractérisée en ce qu'**elle présente un faisceau de poils centraux (44 ; 56) disposé essentiellement de manière centrale par rapport à l'axe de mouvement (29 ; 43 ; 57), le faisceau de poils centraux étant de préférence prévu outre une couronne de poils entourant l'axe de mouvement.

9. Brosse à dents selon l'une quelconque des revendications précédentes, **caractérisée en ce que** des poils dans la région de l'axe de mouvement (29 ; 43) présentent une dureté supérieure à des poils disposés à distance de l'axe de mouvement.

10. Brosse à dents selon la revendication 9, **caractérisée en ce que** la dureté de poils dans la région de l'axe de mouvement (29 ; 43 ; 57) est déterminée par une épaisseur de poils de 7 +/- 2 mil et/ou **en ce que** la dureté de poils disposés à distance de l'axe de mouvement est déterminée par une épaisseur de poils d'environ 6 +/- 2 mil.

11. Brosse à dents selon l'une quelconque des revendications précédentes, **caractérisée en ce que** les poils présentent une longueur libre de poils comprise entre environ 6,5 mm et environ 8,5 mm, notamment d'environ 7,5 mm.

12. Brosse à dents selon l'une quelconque des revendications précédentes, **caractérisée en ce que** les poils forment une surface de travail (70) essentiellement plane.

13. Brosse à dents selon l'une quelconque des revendications 1 à 11, **caractérisée en ce que** les poils forment une surface de travail (48) essentiellement convexe, la surface de travail étant réalisée de préférence de manière essentiellement conique ou pyramidale et/ou étagée.

14. Brosse à dents selon l'une quelconque des revendications précédentes, **caractérisée en ce que** le support de poils présente des ouvertures de réception en forme de trou borgne (46, 47) pour des faisceaux de poils et **en ce que** les faisceaux de poils sont ancrés au moyen d'un procédé de bouchage à fil d'ancrage dans le support de poils.

15. Brosse à dents selon l'une quelconque des revendications précédentes 1 à 13, **caractérisée en ce que** l'agencement de brosse est fabriqué par la couverture par extrusion de faisceaux de poils en formant le support de poils dans le procédé de moulage par injection.

16. Partie de brosse (3) en vue du montage, notamment en vue de l'enfichage, sur une partie de poignée (2) d'une brosse à dents, la partie de brosse présentant un arbre pouvant être entraîné en rotation (23) qui se trouve en liaison d'entraînement avec un agencement de brosse (4), en vue du mouvement de l'agencement de brosse par rapport à un axe de mouvement (29), les poils (45 ; 58 ; 67) étant disposés sur un support de poils monté sur une structure porteuse (25) de manière mobile par rapport à l'axe de mouvement (29) à distance de l'axe de mouvement (29 ; 43 ; 57 ; 66) et étant inclinés selon un angle d'inclinaison dans la direction de l'axe de mouvement, **caractérisée en ce que** les touffes de poils sont disposées en dehors de la structure porteuse (25).

17. Partie de brosse selon la revendication 16, **caractérisée par** les caractéristiques de la partie caractérisante d'au moins l'une quelconque des revendications 2 à 15.
